(19) **Europäisches Patentamt**
**European Patent Office**
**Office européen des brevets**

(11) **EP 3 719 750 A1**

(12) **EUROPEAN PATENT APPLICATION**

(43) Date of publication:
**07.10.2020 Bulletin 2020/41**

(51) Int Cl.:
***G06T 11/00*** *(2006.01)*

(21) Application number: **19167104.9**

(22) Date of filing: **03.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Healthcare GmbH**
**91052 Erlangen (DE)**

(72) Inventors:
• **Baer-Beck, Matthias**
  **91054 Erlangen (DE)**
• **Fournié, Eric**
  **91054 Erlangen (DE)**
• **Petersilka, Martin**
  **91325 Adelsdorf (DE)**
• **Stierstorfer, Karl**
  **91052 Erlangen (DE)**

(54) **MEDICAL IMAGING ARTIFACT CORRECTION**

(57) The present invention relates to a computer-implemented method for correcting at least one imaging artifact in a medical input data set, comprising the steps of
- providing a medical input data set comprising at least one imaging artifact
- reducing the at least one imaging artifact in the input medical image data set, and
- outputting a medical output data set based on the artifact reduction step,
wherein the step of reducing the imaging artifact comprises applying a function trained by a machine-learning algorithm to the input medical image data set.

The present invention further relates to a computer-implemented method for providing the corresponding function trained by a machine-learning algorithm.

# FIG 1

EP 3 719 750 A1

**Description**

The present invention relates to medical image artifact correction algorithms. The presented artifact correction applies a function trained by a machine-learning algorithm.

Medical image reconstruction, especially image reconstruction in the field of Computed Tomography (CT) assumes that measured x-ray projection intensities can be transformed to line integrals by first dividing the intensity values by the unattenuated intensity in air and then applying the logarithm. These line integrals theoretically assume a linear dependency on the transmitted patient thickness and the linear attenuation coefficient of the materials along the x-ray paths. Due to physics of x-ray absorption this relation does not hold true in practice. Accordingly, non-linearities typically lead to artifacts in reconstructed CT images, which need to be accounted for to gain sufficiently high image quality to serve clinical and/or diagnostic purposes.

Physical effects mainly causing non-linearity between line integral values, patient thickness and absorption coefficient are for example

- beam hardening effects,
- radiation scatter,
- non-linearities of the signal detection chain,
- defect detector pixels or the like.

To correct for e.g. (water) beam hardening, methods using pre-calibrated correction curves are applied. The input data of the correction process typically correspond to uncorrected raw data values. The output data correspond to a corrected raw data value. Images reconstructed from the corrected output values are basically free from artifacts due to water beam hardening. The following publications give examples for beam hardening correction algorithms:

- M. KachelrieB, K. Sourbelle, and W. A. Kalender: A first-order raw data precorrection for cone-beam computed tomography, Med. Phys. 33, pp 1269, (2005)
- L. Ritschl, F. Bergner, C. Fleischmann, and M. Kachelrieß: Water calibration for CT scanners with tube voltage modulation, Phys. Med. Biol. 55, pp 4107, (2010)

The following publications give a good overview on known x-ray scatter correction methods:

- Ruhrnschopf, E.-P.; Klingenbeck, K.: A general framework and review of scatter correction methods in X-ray cone-beam computerized tomography. Part 1: Scatter Compensation Approaches. In: Med. Phys. 38 (2011), July, Nr. 7, S. 4296 4311
- Ruhrnschopf, E.-P.; Klingenbeck, K.: A General Framework and Review of Scatter Correction Methods in Cone Beam CT. Part 2: Scatter Estimation Approaches. In: Med. Phys. 38 (2011), September, Nr. 9, S. 5186_5199

Defective pixel correction methods typically apply data interpolation methods, typically taking into account pixel values within the spatial neighborhood of the defective pixel.

Accordingly, it is known to correct individual artifacts. Those data pre-correction methods are typically tailored to one concrete artifact only. Some artifacts can be pre-corrected without user interaction, e.g. scatter artifacts and first-order, i.e. water beam hardening. However, some artifacts can only be corrected after user interaction, e.g. metal artifacts or second-order beam hardening artifacts (due to second material like e.g. bone or iodine). Here, a suitable correction algorithm needs to be manually selected by a radiologist. The right choice requires deep understanding of the physical causes for artifacts, especially considering anatomical conditions of the patient to be examined, as well as the imaging behavior of the imaging modality and or imaging protocol in use. Thus, the selection of an adequate artifact correction algorithm is error prone and potentially time-consuming.

It is thus an object of the present invention to provide alternative means and/or methods which allow for an intuitive, fast and easy-to-use imaging artifact correction for a medical imaging data set. Particularly, it is an object of the present invention to provide alternative means and/or methods for image artifact correction which result in high quality medical images which can do without a specific understanding of the underlying image generation processes.

This object is solved by a method for correcting at least one imaging artifact in a medical input data set, corresponding system, corresponding computer-program product and computer-readable storage medium according to the independent claims. This object is further solved by a method for providing corresponding function trained by a machine-learning algorithm according to another independent claim. Alternative and/or preferred embodiments are object of the dependent claims.

In the following the technical solution according to the present invention is described with respect to the claimed system or apparatuses as well as with respect to the claimed methods. Features, advantages or alternative embodiments described herein can likewise be assigned to other claimed objects and vice versa. In other words, claims addressing the inventive method can be improved by features described or claimed with respect to the apparatuses. In this case, e.g. functional features of the method are embodied by objective units or elements of the system or apparatus.

In particular, the trained function of the methods and systems for correcting an imaging artifact can be adapted by the methods and systems for providing the trained function. Furthermore, the input data in form of a medical input data set can comprise advantageous features and embodiments of the training input data, and vice versa. Furthermore, the output data in form of a medical output data set can comprise advantageous features and embodiments of the output training data, and vice versa.

Accordingly, a first aspect of the present invention is directed to a method for correcting at least one imaging artifact in a medical input data set. The method is a computer-implemented method. The method comprises numerous steps.

A first step is directed to providing a medical input data set comprising at least one imaging artifact. A further step is directed to reducing the at least one imaging artifact in the medical input data set. The step of reducing the imaging artifact comprises applying a function trained by a machine-learning algorithm to the medical input data set. Another step is directed to outputting a medical output data set based on the artifact reduction step.

Preferably not only one, but several, i.e. at least two different imaging artifacts are reduced. Reduction of an imaging artifact comprises correcting the medical input data set for imaging artifacts. With other words, reducing imaging artifacts comprises the at least partial, most preferably total elimination of imaging artifacts from the medical input data set.

Artifacts to be reduced with the presented method are for example imaging artifacts from the field of computed tomography as mentioned already above, e.g. beam hardening effects, radiation scatter effects, metal artifacts and/or artifacts resulting from detector pixel errors. However, imaging artifacts in the sense of the present invention are not limited to the listed ones. Every other imaging artifact might be reduced according to the inventive method. Accordingly, the present invention is preferably applicable to medical image data correction in the field of computed tomography, but also to other fields of medical image data generation, e.g. magnetic resonance tomography or the like.

The step of reducing the imaging artifact in the medical input data set is carried out by applying a function trained by a machine-learning algorithm. This function is trained to automatically analyze medical input data sets for detection or identification and/or reduction or elimination of imaging artifacts contained for producing or generating medical output data sets containing less or no imaging artifacts.

Thus, according to a first alternative, the trained function itself is adapted to correct imaging artifacts in the medical input data set. The trained function is adapted to map an artifact-afflicted medical image data set to a basically artifact-free medical image data set. With other words, the trained function carries out the step of reducing the at least one image artifact. In this case, the output of the trained function corresponds to an artifact-corrected image data set. According to another alternative, the trained function is adapted to identify at least one imaging artifact in the medical input data set. Identification may comprise detection and/or quantification of the imaging artifact. Here, the output of the trained function rather corresponds to a data set indicative of the at least one imaging artifact. In this alternative embodiment, the step of reducing comprises a further step of subtracting the data set indicative of at least one artifact identified with the trained function from the medical input data set.

Summing up, the at least one medical output data set corresponds to or is based on the medical input data set which was artifact-corrected by applying the trained function to the medical input data set.

The inventive method is thus advantageously independent of user input as regards what kind of imaging artifact needs to be reduced and what correction algorithm is best suited for correcting the imaging artifact.

According to a preferred embodiment of the present invention the machine-learning algorithm for training the function is one of a neural network, a convolutional neural network and a deep convolutional neural network. Accordingly, the machine-learning algorithm comprises a neural network, a convolutional neural network and most preferably a deep convolutional network.

In general, a trained function mimics cognitive functions that humans associate with other human minds. In particular, by training based on training data the trained function is able to adapt to new circumstances and to detect and extrapolate patterns.

A neural net or neural network is basically built up like a biological neural net, e.g. a human brain. In particular, an artificial neural network comprises an input layer and an output layer. It may further comprise a plurality of layers between input and output layer. Each layer comprises at least one, preferably a plurality of nodes. Each node may be understood as a biological processing unit, e.g. a neuron. With other words, each neuron corresponds to an operation applied to input data. Nodes of one layer may be interconnected by edges or connections, in particular by directed edges or connections, to nodes of other layers. These edges or connections define the data flow between the nodes of the network. In particular, the edges or connections are equipped with a parameter, wherein the parameter is often denoted as "weight". This parameter can regulate the importance of the output of a first node to the input of a second node, wherein the first node and the second node are connected by an edge. In particular, a neural network can be trained.

A first group of neural network layers may be applied to determine that a medical input data set comprises imaging artifacts. The determination may optionally comprise an identification of what kind of at least one imaging artifact is present in the medical input data set. Here, e.g. grey scale and/or color values of individual image elements of the medical input data set, may serve as input values for the neural network to extract image features indicative of imaging artifacts. Those extracted images features may be for example local or regional contrast, gradients, texture values, deduced tissue density values or the like. The extracted features may then be fed as input values to a second group of network layers, which serve to further assign objects and/or characteristics, preferably imaging artifacts, to at least one of the extracted image features present in the medical input data set. However, both layer groups of the described neural network may likewise be carried out by separated, individual neural networks. With other words, the artifact correction of medical input data sets can alternatively be carried out by a first neural network, and second neural network.

A trained function can comprise a neural network, a convolutional or a deep convolutional network. A neural network can be an adversarial network, a deep adversarial network and/or a generative adversarial network. Apart from that, a trained function can comprise a support vector machine, a decision tree and/or a Bayesian network, and/or the trained function can be based on k-means clustering, Q-learning, genetic algorithms and/or association rules.

According to a preferred embodiment the medical input data set is either one of a medical imaging raw data set and a medical image data set. For example, the medical input data set may, in case of computed tomography data, comprise projection raw data corresponding to x-ray attenuation profiles detected as electrical signals by an x-ray detector of a computed tomography system during an image acquisition procedure. With other words, the medical input data set may exist in projection space. Alternatively, the medical input data set may be realized as at least one medical image data set, i.e. either a slice (two-dimensional) or a volumetric medical image (three-dimensional). With other words, the medical input data set may likewise exist in image space.

According to another preferred embodiment the medical output data set is likewise either one of an artifact-corrected medical raw data set or an artifact corrected medical image data set.

With other words, also the medical output data set may exist either in image space or projection space. Most preferably, the medical output data set is independent of whether the medical input data set exists in image space or projection space. Accordingly, both medical input data set and medical output data set may exist in image space or projection space. Alternatively, the medical input data set may exist in projection space while the medical output data set exists in image space or vice versa. This embodiment guarantees flexible use of the inventive method, as different input data formats and desired output data formats may be accounted for.

According to another preferred embodiment, the step of reducing the at least one imaging artifact is performed on the medical input data set either in projection space or image space.

Thus, according to a first alternative, the trained function is adapted to directly map an artifact-afflicted medical image data set to a basically artifact-free medical image data set either in projection space or image space.

According to another alternative, the trained function is adapted to map an artifact-afflicted medical imaging data set to a data set indicative of the at least one imaging artifact either in projection space or in image space. Furthermore, in this alternative the further step of subtracting the data set indicative of at least one artifact identified with the trained function from the medical input data set may likewise be carried out in projection or image space. It is to be noted that the step of identification of the at least one imaging artifact may be conducted in projection space while the step of subtraction may be conducted in image space or vice versa.

According to a further preferred embodiment of the present invention, the method comprises at least one step of data (back-)projection and data forward-projection applied to at least one of medical input data set and medical output data set. With other words, a medical imaging raw data set may be transformed into a corresponding medical image data set by applying a well-known reconstruction algorithm, e.g. a weighted, filtered back-projection (WFBP) algorithm or an iterative reconstruction algorithm. With other words, the projection step or back-projection step may be part of a reconstruction algorithm. Alternatively or additionally, the inventive method may comprise a conversion of a medical image data set into a medical imaging raw data set, e.g. by applying a forward-projection operation. With other words, a medical imaging raw data set is equivalent to its medical image data set. Preferably, the inventive method comprises more than one projection and/or forward-projection step. The (back-) projection and/or forward-projection step may be carried out prior to or after the step of reducing at least one imaging artifact or somewhere within the step of reducing.

According to another preferred embodiment, the step of image data (back-) projection and/or forward-projection is performed using a function trained by a machine-learning algorithm. Most preferably, this step is likewise conducted by the same trained function which is also applied for image-artifact correction. The step of image data (back-)projection and/or forward-projection may be applied prior to or after the step of artifact correction. Accordingly, the step of image data (back-)projection and/or forward-projection may be applied to the medical input data set or the medical output data set.

According to another preferred embodiment, the method further comprises the step of preprocessing the medical input data set prior to reducing the at least one artifact. Preferably, the step of preprocessing is applied to a medical input data set in the form of a medical imaging raw data set in projection space. The preprocessing may e.g. comprise some general image data set correction operations like division by a raw data set corresponding to a computed tomography air scan and/or taking the logarithm or the like.

A further aspect of the present invention is directed to a computer-implemented method for providing a function trained by a machine-learning algorithm. The method comprises likewise numerous steps. A first step is directed to receiving at least one input training data set with a first training interface, wherein the input training data set corresponds to a medical image data set comprising at least one imaging artifact (in either projection or image space). A second step is directed to receiving at least one output training data set with a second training interface, wherein the output training data set corresponds to the medical image data set according to the input training data set without imaging artifact, i.e. which is basically or totally free of imaging artifacts. Alternatively, the output training data set corresponds to an imaging artifact data set, which represents the imaging artifacts present in the input training data set. Another step is directed to training a function based on the input training data and the output training data with a training computation unit. A last step is directed to providing the trained function with a third training interface.

The trained function generally maps input data on output data. The output data may preferably depend on at least one, preferably a plurality of parameters of the trained function. A parameter for example corresponds to the weight of a node of a neural network as laid out above. The one or more parameter can be determined and/or adapted by applying a training procedure to the trained function. The determining and/or adapting the one or more parameters may preferably be based on a pair of input training data and corresponding output training data. The trained function is applied to the input training data to generate training mapping data. The determining and/or adapting the one or more parameters of the trained function may be based on comparing the training mapping data to the training output data. Furthermore, also a trainable function, i.e. a function with at least one parameter still to be adapted, may be called a trained function.

In general, parameters of the trained function can be adapted by means of training. In particular, supervised training, semi-supervised training, unsupervised training, reinforcement learning and/or active learning can be used. Furthermore, representation learning can be used. In particular, the parameters of the trained function can be adapted iteratively by several steps of training.

According to this inventive method, training the function comprises to feed it with input training data to produce training mapping data. The training mapping data are then compared to corresponding output training data. According to the difference between training mapping data and output training data, at least one parameter of the function is determined or adapted. This procedure is preferably repeated with applying different pairs of input training data sets and output training data sets, until the difference lies within a tolerable range.

Training of the function may be conducted either in image space or projection space. With other words, the input training data and the output training data may be medical imaging raw data sets or medical image data sets.

However, according to a preferred embodiment the training comprises at least one of projecting and forward-projecting the input training data set and/or the output training data set.

According to another preferred embodiment, the output training data set is generated based on at least one of the following: an output training data set simulation, an output training data set measurement or acquisition and precorrection of an input training data set. Thus, according to one alternative, the output training data can be established by mathematical simulation. Here, the output training data correspond to synthetic medical image data sets. This alternative is advantageously unlimited as regards the size or number of output training data, but requires profound knowledge of a mathematical model representative of at least one of the imaging artifacts. Alternatively, the output training data may be generated by measuring medical image data with a measurement setup, which per se avoids imaging artifacts. This approach is e.g. applicable for radiation scatter artifacts. However, not for all imaging artifacts exists measurement setups, which per se suppress the imaging artifact. In a third alternative, output training data may be produced by applying well-known precorrection techniques on artifact-afflicted input training data, which may correspond to medical image data, as mentioned in the introductory part. This alternative has the great advantage that output training data can be generated using e. g. a medical image amount stored in the past for example in the PACS (Picture Archiving and Communication System) of a hospital or hospital chain.

Preferably, the output training data set is generated using more than one of the alternatives, e.g. conduct a simulation-based output training data simulation based on measured output training data.

According to a preferred embodiment, the method for correcting an imaging artifact comprises that the trained function was provided according to a method for providing the trained function.

A further aspect of the present invention is directed to a computer program comprising instructions which, when executed by a computer, cause the computer to carry out the inventive method.

Another aspect of the present invention is directed to a computer-readable medium comprising instructions which, when executed by a computer, cause the computer to carry out the inventive method.

The realization of the invention by a computer program, a computer program product and/or a computer-readable medium has the advantage that already existing providing systems can be easily adopted by software updates in order to work as proposed by the invention.

The computer program product can be, for example, a computer program or comprise another element next to the computer program as such. This other element can be hardware, for example a memory device, on which the computer program is stored, a hardware key for using the computer program and the like, and/or software, for example a documentation or a software key for using the computer program. The computer program product may further comprise development material, a runtime system and/or databases or libraries. The computer program product may be distributed among several computer instances.

A further aspect of the present invention is directed to a system for correcting at least one imaging artifact in a medical input data set, comprising

- a first interface, configured for receiving a medical input data set,
- a computation unit, configured for applying a function trained by a machine learning-algorithm to the input medical image data set to reduce at least one imaging artifact, thereby generating a medical output data set, and
- a second interface, configured for providing the medical output data set.

An interface for receiving may be a hardware or software interface, e.g. a PCI-Bus, USB or firewire. A computing unit can comprise hardware-elements and/or software-elements, e.g. a micro-processor or FPGA ("Field Programmable Gate Array").

Characteristics, features and advantages of the above described invention, as well as the manner they are achieved, become clearer and more understandable in the light of the following description and embodiments, which will be described in detail with respect to the figures. This following description does not limit the invention on the contained embodiments. Same components or parts can be labeled with the same reference signs in different figures. In general, the figures are not to scale. In the following:

FIG 1     depicts a correction system according to one embbodiment of the present invention and a training system,

FIG 2     depicts a medical imaging system together with a correction system according to an embodiment of the present invention,

FIG 3     depicts a correction method according to an embodiment of the present invention,

FIG 4     depicts a correction method according to another embodiment of the present invention,

FIG 5     depicts a schematic overview of the functional relation between medical input image data and medical output image data according to an embodiment of the present invention,

FIG 6     depicts a method for providing a trained function according to an embodiment of the present invention, and

FIG 7     depicts a trained function according to an embodiment of the present invention.

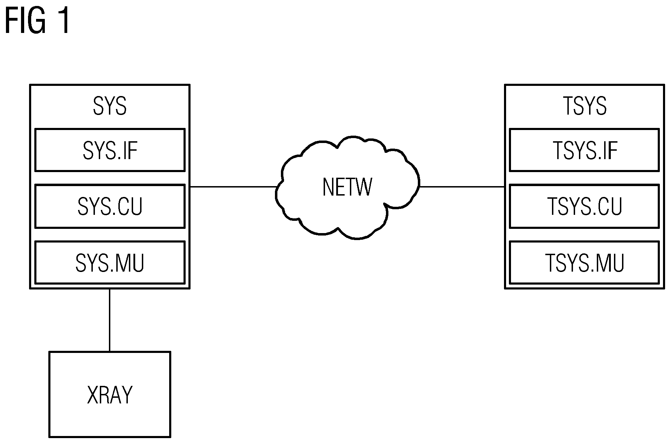

**Figure 1** shows a correction system SYS for correction of at least one imaging artifact in a medical input data set MII and a training system TSYS for training a trained function TF. The shown correction system SYS and the training system TSYS are both adapted to conduct one or more of the inventive methods. The correction system SYS comprises an interface SYS.IF, a computing unit SYS.CU as well as a memory unit SYS.MU. The shown training system TSYS comprises an interface TSYS.IF, a computing unit TSYS.CU and a memory unit TSYS.MU.

The correction system SYS and/or the training system TSYS may preferably be implemented as a computer, a microcontroller or an integrated circuit. As an alternative, the correction system SYS and/or the training system TSYS may be implemented as a real or virtual composite of computers, i.e. as a 'cluster' or a 'cloud'. An interface SYS.IF, TSYS.IF may be implemented in the form of a hardware or software interface, e.g. a PCI-bus, USB or firewire. A computing unit SYS.CU, TSYS.CU may comprise hardware and/or software elements, e.g. a microprocessor or an FPGA (Field Programmable Gate Array). A memory unit SYS.MU, TSYS.MU may be implemented as temporal storage unit, e.g. a random access memory = RAM or a permanent mass storage unit hard drive, USB-stick, SD-card, solid state or the like. Optionally, the correction system SYS and/or the training system TSYS may further comprise an input and/or output unit.

The depicted correction system SYS is connected to the training system TSYS via a network NETW. Furthermore, the correction system SYS is directly connected to a medical imaging modality, here in the form of a computed tomography apparatus XRAY. However, the connection to the medical imaging modality may likewise be realized via the network NETW. The correction system SYS may also be realized as integral part of the medical imaging modality XRAY. Communication between correction system SYS and training system TSYS may take place offline, e.g. by exchanging a memory disk. Communication between correction system SYS and training system TSYS may comprise for example providing additional training data sets from the correction system to the training system or sending the trained function from the training system to the correction system upon finalization of the training. Apart from that, the training system TSYS may be connected to further training data set sources, preferably with a local or regional PACS (Picture Archiving and Communication System).

The depicted correction system SYS is adapted to carry out the embodiments of the inventive method for correcting at least one medical image input data set MII, wherein the interface SYS.IF and the computing unit SYS.CU are adapted to carry out the corresponding steps of the method. The depicted training system TSYS is adapted to adapted to carry out the embodiments of the inventive method for providing the trained function TF to the correction system SYS, wherein the interface TSYS-IF and the computing unit TSYS.CU are adapted to carry out the corresponding steps of the method.

The network NETW may be implemented as a local area network (LAN) or as wide area network (WAN). One example for a local network may be an intranet, an example for a wide area network might be the internet. The network NETW may preferably be realized wireless, most preferably as a wireless LAN (WLAN) or as a Bluetooth-connection. The network NETW may be a combination of more than one of the given examples.

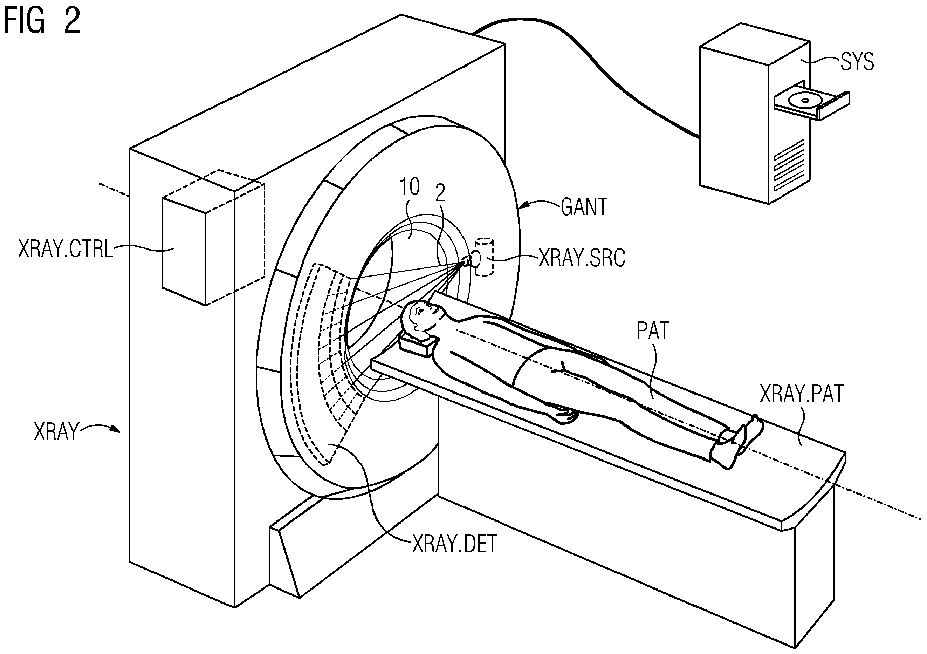

**Figure 2** shows a medical imaging system in the form of a computed tomography apparatus XRAY connected to a correction system SYS. The imaging apparatus XRAY comprises a x-ray radiation source XRAY. SRC for emitting x-rays. The imaging system XRAY further comprises an x-ray detector XRAY.DTC for detecting x-ray. The x-ray source XRAY.SRC and the x-ray detector XRAY.DTC are positioned at the rotating gantry GANT of the computed tomography apparatus XRAY opposing each other. The computed tomography system XRAY further comprises a control and evaluation unit XRAY.CTRL as well as a movable patient table XRAY. PAT for carrying and positioning a patient PAT during image acquisition. The control and evaluation unit XRAY. CTRL is adapted to define and manipulate the relative position between the x-ray source-detector arrangement XRAY.SRC, XRAY.DTC and the patient PAT on the patient table XRAY.PAT in the course of an image acquisition procedure. The control and evaluation unit XRAY. CTRL is further adapted for acquiring or receiving and evaluating medical image data sets in the form of computed tomography images or projections which then may serve as medical input data sets for either one of the methods for correction of a medical input data set or as input training data set for either one of the methods for providing a trained function. According to an alternative embodiment, the correction system SYS may be integral part of the control and evaluation unit XRAY.CTRL.

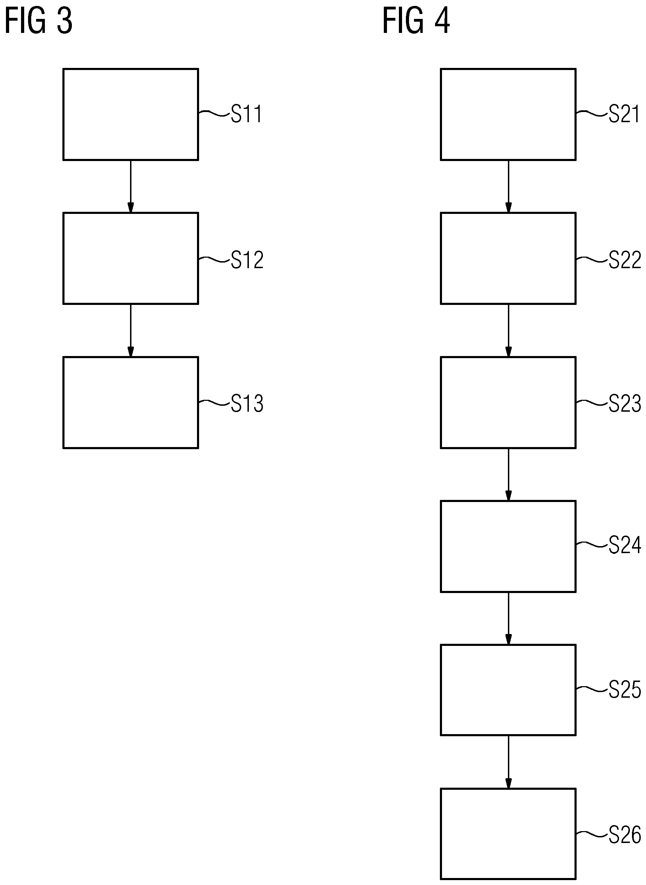

**Figure 3** depicts a correction method according to an embodiment of the present invention. This method comprises several steps.

A first step S11 is directed to providing a medical input data set MII to an inventive correction system SYS according to Figure 1 or directly to its computing unit SYS. CU. The medical input data set MII may be provided by a medical imaging apparatus XRAY like described with respect to figure 2 via an interface SYS.IF. The medical input data set MII is characterized in that it comprises at least one imaging artifact or imaging error which deteriorates the clinical quality of the medical input data set MII in the sense of lower spatial resolution, less spatial contrast, artifact structures hiding or covering anatomical structures or the like.

A second step S12 is directed to reducing at least one imaging artifact in the medical input data set MII. This step applies a function TF trained by a machine-learning algorithm to the medical input data set MII. The trained function TF is preferably realized in the form of a neural network, a convolutional neural network or a deep neural network. The trained TF function is adapted to map an artifact-afflicted medical input data set MII to an artifact-free or at least artifact-reduced medical output data set MOI. Alternatively, the trained function TF is adapted to map an artifact-afflicted medical input data set MII to an imaging artifact data set IAD, wherein the imaging artifact data set IAD represents all imaging artifacts present or identified within the medical input data set MII. According to the second alternative step S12 further comprises a step directed to eliminating the identified imaging artifacts represented with the imaging artifact data set IAD from the medical input data set MII, e. g. by a subtraction operation, to produce the medical output data set MOI. A third step S13 is directed to outputting the medical output data set MOI via an interface SYS.IF. The output may for example further comprise the display of the medical output data set MOI via a display device of the medical imaging apparatus XRAY or of a reading workstation.

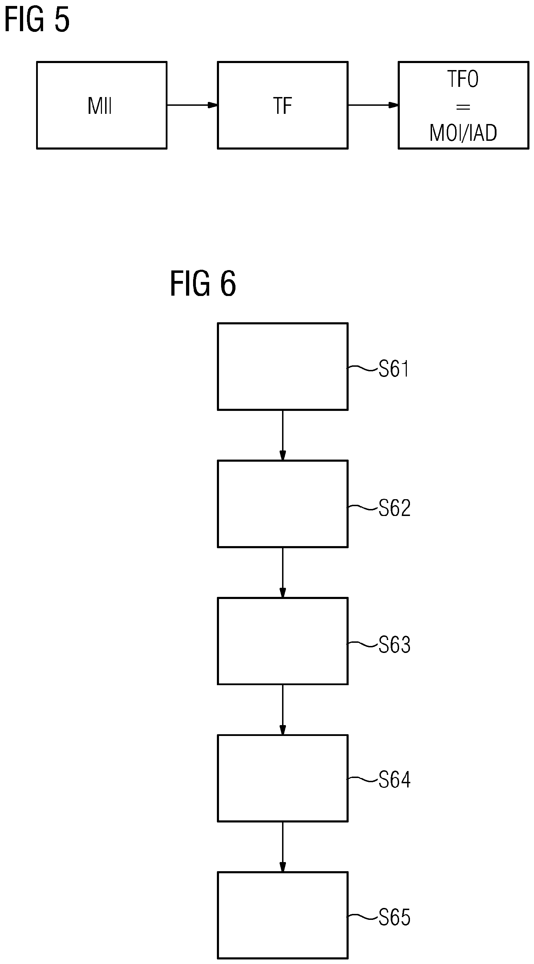

**Figure 5** depicts a schematic overview of the functional relation between medical input image data and the output data TFO of the trained function TF according to an embodiment of the present invention.

The medical input image data MII may correspond to a medical imaging raw data set or a medical image data set, i.e. projection data or computed tomography image data for the medical imaging system XRAY according to Figure 2. The output data set TFO of the trained function TF may correspond to the medical output data set MOI, which may likewise correspond to an artifact-corrected medical imaging raw data set or an artifact-corrected medical image data set. Alternatively, the output data set TFO corresponds to an imaging artifact data set IAD, either in the form of a raw data artifact or an image artifact data set. The trained function TF may be adapted to transform either an imaging raw data set into an image data set or vice versa in the course of mapping the medical input data set MII to the output data set TFO of the trained function. Preferably, the trained function is adapted to apply projection, forward-projection, back-projection and/or reprojection steps on either one of the data sets. Alternatively, this transformation step may be conducted before or after the trained function TF is applied to the medical input data set MII.

**Figure 4** depicts a correction method according to another embodiment of the present invention.

A first step S21 is directed to providing a medical input data set MII to an inventive correction system SYS according to Figure 1 or directly to its computing unit SYS. CU. Step S21 basically corresponds S11 according to Figure 3.

A second step S22 is directed to preprocessing the medical input data set MII. This preprocessing may be conducted either in image space or projection space. This preprocessing may comprise initial or basic image correction measures. For example, in projection space this step may comprise to divide the medical input data set in the form of medical input imaging raw data by an airscan and take a logarithm.

A third step S23 is directed to back-projecting the preprocessed medical input imaging raw data into image space to generate a medical input data set MII in the form of medical input image data according to a computed tomography image.

A fourth step S24 is directed to reducing at least one imaging artifact in the medical input data set MII. This step S24 basically corresponds to the step S12 according to figure 3. Depending on the fact, that the trained function TF outputs an artifact-corrected medical output data set MOI or an imaging artifact data set IAD, step S24 may likewise further comprise a step directed to eliminating the identified imaging artifacts represented with the imaging artifact data set IAD from the medical input data set MII.

Another optional step S25 may be directed to forward-projecting or re-projecting the artifact-corrected the medical output data set MOI from image space back to projection space. This step S25 may be conducted by the trained function TF. The same applies for step S23. Furthermore, steps S23 and S25 may be exchanged such that the medical input data set MII is forward-projected from image space to projection space in step S23 and the medical output data set MOI is back-projected from projection space to image space in step S25.

A further step S26 is directed to outputting the medical output data set MOI via an interface SYS.IF according to step S13 of figure 3.

**Figure 6** depicts a method for providing a trained function according to an embodiment of the present invention. This method is conducted for example by the training system TSYS according to figure 1. The method comprises the following steps:

In step S61 at least one input training data set ITD is received by the training system TSYS via a receiving interface TSYS.IF. In step S62 at least one output training data set OTD is received by the training system TSYS via the interface.

Input training data ITD and output training data OTD may be provided in image space or projection space.

Input training data set ITD may correspond to medical input data set MII, which is characterized in the fact that is comprises at least one imaging artefact. Output training data set OTD may correspond to the artifact-corrected input training data ITD. With other words, the output training data OTD correspond to the result to be achieved. Alternatively, the output training data set OTD may correspond to an imaging artifact data set IAD representing and/or quantifying at least one imaging artifact present in a corresponding input training data set ITD. With other words, the training data set comprise pairs of input training data sets ITD and corresponding output training data OTD. Input training data set and output training data set ITD, OTD may independently from each other be realized in image mage space or projection space.

With other words, the input training data and the output training data may be medical imaging raw data sets or medical image data sets. Preferably, the amount of training data comprises a plurality of pairs of input training data sets ITD an output training data sets OTD. For example, the training data comprise several hundred or thousand, e.g. 5000, preferably, 7000 individual pairs of input training data sets ITD and output training data sets OTD.

The method may comprise an optional step S63, which applies a projection or back-projection procedure on the input training data set to transfer at least one of the input and/or the output training data set ITD, OTD from image space to projection space or vice versa. With other words, the input training data and the output training data may be medical imaging raw data sets or medical image data sets.

Step S64 is directed to training a function based on the input training data set ITD and the output training data set OTD. This training basically corresponds to a supervised learning method. The training of the function comprises to feed it with a plurality of input training data sets ITD to produce a plurality of training mapping data sets TMD. The training mapping data are compared to corresponding output training data sets OTD. The difference between the training mapping data set and the respective output training data set determines, which at least one parameter, preferably at least one of the weights, of the function is to be adapted and how it is adapted. This procedure is repeated with applying different pairs of input training data sets and output training data sets ITD, OTD, until the training mapping data sufficiently correspond to the respective output training data OTD. Thereby, the artificial neural network independently learns and adapts the weights for individual nodes until actual output values (training mapping data TMD) of the last network layer are sufficiently close to the known output values (training output data OTD). Supervised learning thus corresponds to an optimization problem, wherein the difference, reflected by a suited cost function, between the training mapping data TMD and the output training data OTD is minimized.

The learning of the parameters or weights or open coefficients of the artificial neural network can thus be done by minimizing the difference between the output of the network (training mapping data TMD) and the ground truth (training output data OTD). Thereby, the optimization is performed with respect to the open coefficients of the network.

Accordingly, in the training phase, the function is preferably trained to determine different preferably predefined artifact types like beam hardening and/or scattering artifacts and/or to correct or eliminate them. Each artifact pattern may e.g. be characterized by individual image data set features. With other words, the neural network needs to learn how to map artifact-distorted medical input data sets MII to artifact-reduced or artifact-free medical output data sets MOI or imaging artifact data sets IAD.

The training of the function may preferably comprise a manual mapping step, which assigns a desired output value of the function according to the output training data set OTD for a respective input value. The assignment preferably corresponds to a received user input.

The training of the function may be conducted either in image space or projection space.

As already indicated, the training of the function is based on at least one output training data set OTD, which is either assumed to be an imaging artifact-free medical data set or a data set representing at least one artifact present in the corresponding input training data set ITD.

Due to the complexity of signal measurement and generation process, the output training data set OTD is often not exactly known. For at least some of the physical and/or technical processes that cause imaging artifacts in medical images, preferably CT images, there exist specific measurement or acquisition setups to suppress the impact of those processes on the acquired measurement raw data and thus the medical images. With such a measurement setup, data can be acquired leading to an artifact-free output training data set OTD versus using a standard setup leading to artifact-afflicted medical image data set according to an input training data set ITD.

For example, to generate an output training data set OTD which is free of signal portions due to scattered radiation by measuring image data, the size of the field of view (FOV) of a computed tomography system may be reduced, e.g. by collimating the x-ray beam before the beam enters the probe or the patient. The thus measured data are assumed to be scatter-free. Alternatively, (cross-)scatter portions may be directly measured using a computed tomography dual-source-dual-detector arrangement or a beam blocking method, for example, as described in T. Niu, L. Zhu: Scatter correction for full-fan volumetric CT using a stationary beam blocker in a single full scan, Med. Phys. 38, pp 6027, (2011).

The thus generated output training data OTD may be used as scatter-free 'ground-truth' values, serving to train a function tailored for automatic scatter correction.

However, not all imaging artifacts may be addressed with a corresponding measurement setup. Accordingly, an output training data set OTD may alternatively or in addition be simulated. With other words, the output training data set OTD may be synthetically generated or better said calculated. A synthetized output training data set OTD thus corresponds to an estimation for an artifact-free ground truth data set'. Preferably, an artifact-afflicted medical input data set MII, which may likewise serve as input training data set ITD, serves as a starting point for simulating the corresponding output training data set OTD. the simulation process may preferably apply at least one rule or prior knowledge, e.g. a mathematical model which is characteristic or typical for at least one imaging artifact.

Simulation of the output training data set OTD may be conducted in projection/raw data space or in image space. The simulation may comprise simulation of medical image data sets or imaging artifact data sets.

Generally, two alternative scenarios may be considered for simulation artifact-free medical image data sets for use as output training data sets OTD.

1. Measured input training data - simulated output training data

A simulation approach in projection space requires a mathematical model for corrected and artifact-free raw data. For example, a model for monochromatic line integrals through a scanned patient would be required. This model would be matched with measured raw data of an ideal phantom. In a preferred embodiment, the mathematical model has open parameters which can be adjusted in a way that the data resulting from the model, e.g. monochromatic projection values approach measured projection values. Assuming for example cylindrical water phantoms, the open model parameters for the line integrals could be:

- diameter of the water cylinder,
- position of the center of the water cylinder,
- attenuation coefficient of water.

Accordingly, the training of the function could then comprise minimizing the difference between training mapping data generated by the trained function TF when fed with uncorrected, artifact-afflicted image measurement raw/projection data, here the input training data ITD, and the output training data OTD according to the mathematical model. Here, any suitable optimization algorithm, e.g. a gradient descent, can be used. This approach could be applied to uncorrected images, too, by transforming them to raw data space using a forward projection algorithm.

A simulation approach in image space comprises reconstruction of a first image based on measured and uncorrected CT raw data. To avoid severe artifacts in the reconstructed image a coarse data precorrection may be applied. Each pixel in the reconstructed image is assigned to a CT value that reflects the true - not the artifact-degraded - CT value of that pixel which would have been obtained assuming that the initial data used for the reconstruction would have been perfectly precorrected. In a preferred embodiment, water phantoms are used for training the function and the assignment of CT values to image pixels is done by a simple thresholding operation.

The thus generated artifact-free model of the scanned patient is forward projected using the geometric setup of the initial scan to simulate a virtual artifact-free ground truth for the measured CT raw data to generate the output training data set OTD.

2. Simulation based input training data - simulation based output training data

Given that there is a simulation algorithm for all or some of the physical or technical processes which lead to artifacts in measured CT raw data or final reconstructed images, the training of the network could be done by a pure simulation based approach: Both the artifact-free output training data sets OTD and the artifact-afflicted input training data sets ITD with artifacts and errors are simulated.

In contrast to measuring an output training data set OTD simulated output training data are advantageously arbitrary in size which may lead to a per se unlimited amount of output training data.

Instead of simulating artifact-corrected imaging raw data or medical images for use as output training data OTD, it is further possible to determine the artifact content in measured CT raw data / CT images. Here the output training data set OTD corresponds to an imaging artifact data set IAD. The input training data set ITD corresponds to a artifact-afflicted medical input image. The generation of the output training data set OTD in the form of an imaging artifact data set IAD may be realized by applying the same methods as described above, but using the difference signal between artifact-afflicted measured raw data/images and artefact-corrected raw data/images as the output training data set OTD. Furthermore, the thus generated output training data sets OTD may be processed to incorporate prior knowledge about typical properties of the artifact signal. For example, an imaging artifact may only comprise low frequency contributions. Accordingly, low pass filtering of the difference signal could be low pass filtered.

None of the methods to generate a ground truth in the form of the output training data set OTD need to be applied exclusively. Combinations of the methods may be favorable. Given that a good and accurate simulation algorithm for at least some of the medical input image data or imaging artifacts exists, the quality of the trained function TF may benefit from using the simulation-based approach for those artifacts or by running the simulation-based approach on top of one of the remaining methods for generating output training data sets OTD serving as a ground truth.

In a further step S65, the trained function TF is provided or output by the training system TSYS via a corresponding interface TSYS.IF, preferably to the correction system SYS.

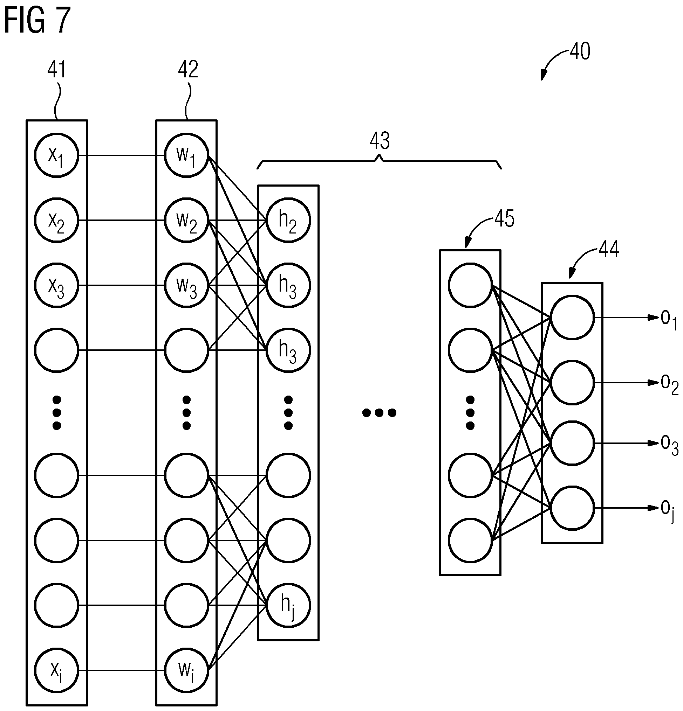

**Figure 7** depicts a trained function TF in the form of a neural network 40 according to an embodiment of the present invention as it may be used for performing either of the inventive methods according to figure 3,4 and/or 6. The neural network 40 answers to input values of a plurality of input nodes $x_i$ of an input layer 41. All nodes of the neural network 40 are applied to generate one or a plurality of output values $o_j$. The neural net 40 of this embodiment learns by adapting weights or weighting parameters $w_i$ (weights) of individual nodes based on training data. Input values for the input nodes $x_i$ are for example, image element values, preferably pixel or voxel values, of a medical input data set MII. The neural network 40 weights 42 the input values based on a learning procedure as described with respect to figure 6. Output values $o_j$ of the output layer 44 of the neural network 40 may preferably correspond to identification and or quantification of at least one imaging artifact present in the medical input data set MII or to an artifact-corrected medical output data set MOI. Accordingly, the output values $o_j$ may correspond to individual image element values according to an artifact-corrected medical output data set MOI, i.e. at least one input image element value was transformed to represent an artifact-free image element value. Accordingly, each output node of the output layer 44 may output one individual image element value. According to another example, the output layer 44 may comprise four output nodes, each of the four nodes representing a certain imaging artifact out of four different imaging artifacts. An imaging artifact is to be understood as a predefined and preferably clinically confirmed visual image feature combination. With other words, output value $o_1$ may be representative of a first image artifact, output value $o_2$ may be representative of a second imaging artifact, output value $o_3$ may be representative of a third imaging artifact, and output value $o_j$ may be representative of a fourth imaging artifact. According to this embodiment, the neural network 40 is trained during training phase using training data in either of the forms described with respect to figure 6.

The artificial neural network 40 further comprises a hidden layer 43 each comprising a plurality of nodes $h_j$. There may be more than one hidden layers 43, wherein the output values of of one hidden layer serve as input values for the following hidden layer. The individual nodes of a hidden layer 43 execute mathematical operations. Thus, an output value $h_j$ of a node corresponds to a non-linear function f of its input values $x_i$ and the weighting parameters $w_i$. After receiving an input value $x_i$, the node $h_j$ may for example execute a summation of a multiplication of each input value $x_i$ wherein the multiplication is weighted with the weighting parameter $w_i$, as defined below:

$$ h_j = f\left(\sum_i x_i \cdot w_{ij}\right) $$

Most preferably, an output value of a node $h_j$ is generated as a function f of node activation, e.g. a sigmoidal function or a linear ramping function. The output values $h_j$ are thus propagated through the hidden layers 43 and finally transferred to the output layer 44. Here, once again, summation of a weighted multiplication of each output value $h_j$ may be calculated as a function of node activation f:

$$o_j = f\left(\sum_i h_i \cdot w'_{ij}\right)$$

Most preferably, the hidden layers 43 comprise a last hidden layer 45 corresponding to the last but one layer of the neural network 40.

The shown neural network 40 corresponds to a feedforward neural network. Accordingly, all nodes $h_j$ of the networks layers 42, 43, 44, 45 process the output values of the previous layer in the form of their weighted sum as input values. Of course, other embodiments of neural network types may be applied, e.g. a feedback-network, wherein an input value of a node of one layer may be the output value of a node of a consecutive network layer.

The neural net 40 may preferably be trained to recognize and/or eliminate imaging artifacts using a method according to supervised learning. Well established is the backpropagation method, which may be applied for all embodiments of the present invention. During training phase the neural network 40 is applied to training input values to produce corresponding and known output values. Mean square error (MSE) between produced and expected output values are calculated in a iterative manner to adapt individual weighting parameters $w_i$ as long as deviation between calculated and expected output values is within predefined tolerance.

Wherever meaningful, individual embodiments or their individual aspects and features can be combined or exchanged with one another without limiting or widening the scope of the present invention. Advantages which are described with respect to one embodiment of the present invention are, wherever applicable, also advantageous to other embodiments of the present invention.

**Claims**

1. A computer-implemented method for correcting at least one imaging artifact in a medical input data set (MII), comprising the steps of

   - providing (S11; S21) a medical input data set comprising at least one imaging artifact
   - reducing (S12; S24) the at least one imaging artifact in the input medical image data set, and
   - outputting (S13; S26) a medical output data set (MOI) based on the artifact reduction step,

   wherein the step of reducing the imaging artifact comprises applying a function trained by a machine-learning algorithm (TF, 40) to the input medical image data set.

2. Method according to claim 1, wherein the machine-learning algorithm for training the function is one of a neural network, a convolutional neural network and a deep convolutional neural network.

3. Method according to any of the preceding claims, wherein the medical input data set is either one of a medical imaging raw data set and a medical image data set.

4. Method according to any of the preceding claims, wherein the medical output data set is either one of an artifact-corrected medical raw data set or an artifact-corrected medical image data set.

5. Method according to any of the preceding claims, wherein the step of reducing the at least one imaging artifact is performed on the medical input data set either in projection space or image space.

6. Method according to any of the preceding claims, further comprising at least one step of data projection and data forward-projection (S23, S25) applied to at least one of medical input data set and medical output data set.

7. Method according to claim 6, wherein the step of image data projection and/or forward-projection is performed using a function trained by a machine-learning algorithm.

8. Method according to any of the preceding claims, further comprising the step of preprocessing (S22) the medical input data set prior to the step of reducing the at least one artifact.

9. A computer-implemented method for providing a function trained by a machine-learning algorithm (TF, 40), comprising:

   - receiving (S61) at least one input training data set (ITD) with a first training interface (TSYS.IF), wherein the input training data set corresponds to a medical image data set comprising at least one imaging artifact,
   - receiving (S62) at least one output training data set (OTD) with a second training interface (TSYS.IF), wherein the output training data set corresponds to

     • the medical image data set according to the input training data set without imaging artifacts, or
     • an imaging artifact data set (IAD), representing the imaging artifact present in the input training data set,

   - training (S64) a function based on the input training data set and the output training data set with a training computation unit (TSYS.CU),
- providing (S65) the trained function with a third training interface.

10. Method according to claim 9, wherein the training comprises at least one step of projecting and forward-projecting (S63) the input training data set and/or the output training data set.

11. Method according to claim 9 or 10, wherein the output training data set is generated based on at least one of the following: an output training data set simulation, an output training data set acquisition and an input training data set precorrection.

12. The method according to any one of claims 1 to 8, wherein the trained function was provided by the method according to any of the claims 9 to 11.

13. A computer program comprising instructions which, when executed by a computer, cause the computer to carry out either method according to any of claims 1 to 12.

14. A computer-readable medium comprising instructions which, when executed by a computer, cause the computer to carry out either method according to any of claims 1 to 12.

15. A system (SYS) for correcting at least one imaging artifact in a medical input data set (MII), comprising

   - a first interface (SYS.IF), configured for receiving a medical input data set,
   - a computation unit (SYS.CU), configured for applying a function trained by a machine learning-algorithm (TF, 40) to the input medical image data set to reduce at least one imaging artifact, thereby generating a medical output data set (MOI), and
   - a second interface (SYS.IF), configured for providing the medical output data set.

## FIG 1

# FIG 2

SYS

GANT

10  2

XRAY.CTRL

XRAY.SRC

PAT

XRAY

XRAY.PAT

XRAY.DET

EP 3 719 750 A1

FIG 3

```
┌──────────┐
│          │──S11
│          │
└────┬─────┘
     │
     ▼
┌──────────┐
│          │──S12
│          │
└────┬─────┘
     │
     ▼
┌──────────┐
│          │──S13
│          │
└──────────┘
```

FIG 4

```
┌──────────┐
│          │──S21
│          │
└────┬─────┘
     │
     ▼
┌──────────┐
│          │──S22
│          │
└────┬─────┘
     │
     ▼
┌──────────┐
│          │──S23
│          │
└────┬─────┘
     │
     ▼
┌──────────┐
│          │──S24
│          │
└────┬─────┘
     │
     ▼
┌──────────┐
│          │──S25
│          │
└────┬─────┘
     │
     ▼
┌──────────┐
│          │──S26
│          │
└──────────┘
```

## FIG 5

## FIG 6

# FIG 7

Europäisches
Patentamt

European
Patent Office

Office européen
des brevets

# EUROPEAN SEARCH REPORT

Application Number

EP 19 16 7104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/374245 A1 (XU JIAOFENG [US] ET AL) 27 December 2018 (2018-12-27) * abstract * * paragraph [0039] * * paragraph [0080] * * figure 9C * | 1-15 | INV. G06T11/00 |
| T | ERIC FOURNIE ET AL: "CT Field of View Extension Using Combined Channels Extension and Deep Learning Methods", ARXIV.ORG, CORNELL UNIVERSITY LIBRARY, 201 OLIN LIBRARY CORNELL UNIVERSITY ITHACA, NY 14853, 26 August 2019 (2019-08-26), XP081469586, * the whole document * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 17 September 2019 | Millet, Christophe |

## ANNEX TO THE EUROPEAN SEARCH REPORT
## ON EUROPEAN PATENT APPLICATION NO.

EP 19 16 7104

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2019

| Patent document cited in search report | Publication date | Patent family member(s) | Publication date |
|---|---|---|---|
| US 2018374245 A1 | 27-12-2018 | US 2018374245 A1<br>WO 2019005180 A1 | 27-12-2018<br>03-01-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. KACHELRIEB ; K. SOURBELLE ; W. A. KALENDER.** A first-order raw data precorrection for cone-beam computed tomography. *Med. Phys.,* 2005, vol. 33, 1269
- **L. RITSCHL ; F. BERGNER ; C. FLEISCHMANN ; M. KACHELRIEß.** Water calibration for CT scanners with tube voltage modulation. *Phys. Med. Biol.,* 2010, vol. 55, 4107
- **RUHRNSCHOPF, E.-P. ; KLINGENBECK, K.** A general framework and review of scatter correction methods in X-ray cone-beam computerized tomography. Part 1: Scatter Compensation Approaches. *In: Med. Phys.,* July 2011, vol. 38 (7), 4296-4311
- **RUHRNSCHOPF, E.-P. ; KLINGENBECK, K.** A General Framework and Review of Scatter Correction Methods in Cone Beam CT. Part 2: Scatter Estimation Approaches. *In: Med. Phys.,* September 2011, vol. 38 (9), 5186-5199
- **T. NIU ; L. ZHU.** Scatter correction for full-fan volumetric CT using a stationary beam blocker in a single full scan. *Med. Phys.,* 2011, vol. 38, 6027